(19) Europäisches Patentamt

European Patent Office

Office européen des brevets

(11) **EP 0 546 948 B1**

(12) **FASCICULE DE BREVET EUROPEEN**

(45) Date de publication et mention
de la délivrance du brevet:
**04.09.1996 Bulletin 1996/36**

(51) Int. Cl.⁶: **B60T 8/00**

(21) Numéro de dépôt: **92403365.7**

(22) Date de dépôt: **11.12.1992**

(54) **Procédé de contrôle de la décélération d'un véhicule**

Verlangsamungs-Steuerungsverfahren eines Kraftfahrzeugs

Decelerating control process of a vehicle

(84) Etats contractants désignés:
**DE ES GB IT**

(30) Priorité: **13.12.1991 FR 9115491**

(43) Date de publication de la demande:
**16.06.1993 Bulletin 1993/24**

(73) Titulaire: **REGIE NATIONALE DES USINES RENAULT S.A.**
**F-92109 Boulogne Billancourt (FR)**

(72) Inventeurs:
• **Lezy, Patrick**
**F-92360 Meudon la Foret (FR)**
• **Kohler, Yves**
**F-27400 Louviers (FR)**
• **Aymard, Christophe**
**F-27400 Louviers (FR)**

(74) Mandataire: **Ernst-Schonberg, Michel et al**
**REGIE NATIONALE DES USINES RENAULT**
**Service 02 67**
**8-10, Avenue Emile Zola**
**92109 Boulogne-Billancourt (FR)**

(56) Documents cités:
**EP-A- 0 204 483**      **EP-A- 0 246 790**
**DE-A- 3 638 866**      **GB-A- 2 053 394**
**GB-A- 2 127 505**

**Description**

L'invention concerne un procédé de contrôle de la décélération d'un véhicule équipé d'actionneurs de freinage à commande électrique.

Les publications GB-A-2.053.394 et EP-A-0.204.483 décrivent des procédés de décélération d'un véhicule muni de roues avant et arrière équipées d'actionneurs de freinage à commande électrique qui consiste à mesurer la décélération réelle du véhicule, à élaborer une consigne de décélération en fonction du déplacement de la pédale de freinage et de l'effort exercé sur celle-ci, et à ajuster les pressions de commande des freins avant et arrière de façon que la décélération réelle mesurée soit égale à la consigne de décélération.

Tout comme dans les systèmes classiques, la décélération engendrée par une action sur la pédale de frein est dépendante d'un grand nombre de facteurs, par exemple l'évolution de l'efficacité du freinage en fonction de la température, du profil de la route, etc.... En outre, la répartition de freinage n'est pas optimale. On sous-estime fortement le freinage sur l'essieu arrière pour garantir la stabilité du véhicule en toutes circonstances. Il en résulte une diminution notable de l'efficacité de freinage globale.

L'invention vise donc à pallier à ses inconvénients et propose un procédé permettant d'obtenir un compromis statisfaisant et stable entre l'effort exercé sur la pédale, ou le déplacement de celle-ci, et la décélération réelle du véhicule. Les facteurs perturbants (état de la route, usure du système de freinage, etc...) sont totalement compensés par le procédé et la répartition de freinage entre les deux essieux est optimisée tout en garantissant la stabilité du véhicule.

Selon l'invention, de manière à asservir la décélération du véhicule à une consigne de décélération, on ajoute à cette consigne de décélération, une erreur égale à la différence entre une valeur de décélération estimée du véhicule et la valeur de décélération réelle du véhicule ; la décélération estimée étant fonction notamment des pressions de commande des freins avant et arrière, des coefficients d'efficacité de freinage des trains avant et arrière et de la masse du véhicule.

On comprendra mieux les buts, aspects et avantages de la présente invention, d'après la description donnée ci-après du mode de réalisation du procédé, en se référant aux dessins annexés, dans lesquels :

- la figure 1 est une représentation schématique du dispositif de mise en oeuvre du procédé selon l'invention ;

- la figure 2 est un schéma représentatif du mode de réalisation du procédé selon l'invention.

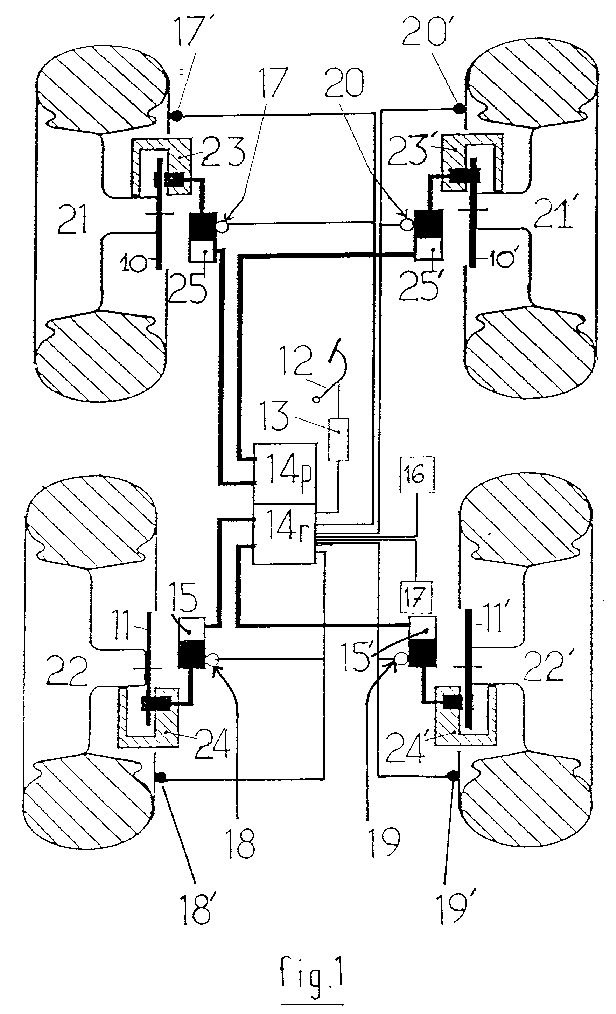

Le dispositif de mise en oeuvre du procédé est appliqué à un véhicule de tourisme représenté schématiquement sur la figure 1 dont chaque roue avant 21, 21' et arrière 22, 22' est munie d'un frein 23, 23', 24, 24' qui possède un cylindre récepteur dans lequel se déplace un piston qui applique les garnitures de friction avec la force nécessaire contre une piste de freinage 10, 10', 11, 11' tournant avec la roue.

La figure 1 décrit le dispositif appliqué à un frein à disque mais qui est tout aussi bien applicable à un frein à tambour.

A la pédale de freinage 12 est associé un capteur 13 qui constitue un moyen de mesure qui transmet un signal représentatif de la course et/ou de la force appliquée à la pédale 12.

Un circuit de traitement 14 à bloc de régulation 14R et bloc de puissance 14P transforme le signal du capteur 13 en des grandeurs (tension, courant où fréquence) de commande d'actionneurs électriques à courant continu ou alternatif 5, 5', 15, 15', destinés à régler ou ajuster les pressions dans les cylindres de frein.

Le bloc de régulation 14R peut également gérer plusieurs paramètres mesurés par des capteurs 17 à 20 délivrant des signaux en corrélation avec la force de freinage de chaque roue. A titre d'exemple, les capteurs 17 à 20 associant des jauges de contrainte à une membrane déformante constituent des capteurs de pression. De même, un capteur 17' à 20', associé à chaque roue, délivrera un signal représentatif de la vitesse de la roue.

L'ensemble des capteurs 17, 18, 19, 20 délivre de la sorte des signaux en corrélation avec un signal de commande dont les écarts servent à établir le signal de commande des actionneurs, de manière à asservir l'effort de freinage de chaque roue à une valeur de consigne donnée par le bloc de régulation 14R.

La valeur de consigne du signal aux bornes des actionneurs électriques 5, 5' , 15, 15' est contrôlée en fonction de la charge dont la répartition statique avant/arrière est estimée à partir du signal issu d'un capteur 16 mesurant le débattement entre l'essieu arrière et la caisse.

En outre, le bloc de régulation 14R reçoit un signal issu du capteur 17 et représentatif de la décélération réelle du véhicule ($\gamma$ réel).

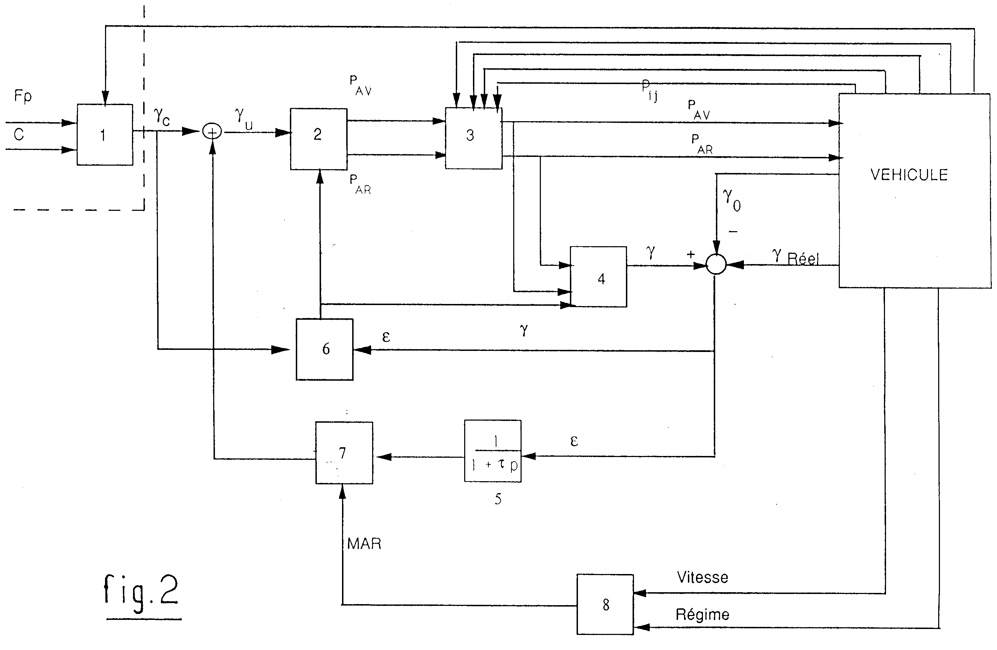

La figure 2 représente un mode de réalisation du procédé de régulation associé au véhicule.

Dans ce dispositif, le bloc 1 reçoit du capteur 13 de la pédale de freinage 12, une grandeur électrique (C) représentative de la course de la pédale et une grandeur (Fp) représentative de l'effort exercé sur celle-ci. En fonction de ces deux grandeurs, il élabore une consigne de décélération ($\gamma$c). La valeur ainsi élaborée peut encore être paramétrée par la vitesse du véhicule afin de créer une modulation de l'assistance de freinage.

A cette consigne de décélération ($\gamma c$) s'ajoute une erreur $\varepsilon$ définie plus loin. Il en résulte une grandeur de commande ($\gamma u$) qui constitue l'entrée du régulateur 2.

Les sorties de ce régulateur sont les grandeurs relatives aux pressions de commande des freins avant et arrière (Pav, Par). Ces pressions sont obtenues en effectuant d'une part le produit de la décélération de commande ($\gamma u$) par la charge du véhicule supportée par le train avant (Mav) rapporté au coefficient d'efficacité de freinage (Kav) du train avant, et d'autre part le produit de la décélération de commande ($\gamma u$) par la charge du véhicule supportée par le train arrière (Mar) rapporté au coefficient d'efficacité de freinage du train arrière (Kar) selon les lois :

$$Pav = \frac{Mav\ (\gamma u)}{Kav}$$

$$Par = \frac{Mar\ (\gamma u)}{Kar}$$

Les charges (Mav, Mar) supportées par les trains avant et arrière sont calculées à partir de la connaissance de la masse totale (M) du véhicule de l'information issue du capteur 16 qui mesure le débattement entre l'essieu arrière et la caisse et du report de charge calculé à partir de l'information du capteur 17 qui mesure la décélération du véhicule, selon les formules.

$$Mav = Msav + \frac{M\gamma h}{L}$$

$$Mae = Msar - \frac{M\gamma h}{L}$$

où

Msav représente la charge statique du train avant,
Msar représente la charge statique du train arrière,
M représente la masse totale du véhicule représente la valeur de décélération du véhicule,
h représente la hauteur du centre de gravité du véhicule par rapport au sol,
L représente l'empattement du véhicule.

La décélération ($\gamma u$) étant égales à la somme $\gamma c + \varepsilon$, il revient à dire que l'on calcule ainsi une pression de commande des freins avant (Pav) en multipliant la consigne de décélération additionnée de l'erreur par le rapport existant entre la charge supportée par le train avant (Mav) et le coefficient d'efficacité de freinage du train avant (Kav), et une pression de commande des freins arrière (Par) en multipliant la consigne de décélération additionnée de l'erreur par le rapport existant entre la charge supportée par le train arrière (Mar) et le coefficient d'efficacité de freinage du train arrière (Kar).

Les pressions de commande des freins avant et arrière (Pav, Par) sont fournies à l'entrée d'un bloc 3 recevant du véhicule quatre informations (Pij) représentant la pression de freinage de chacune des roues. Ce bloc limite, pour chaque train de roues, la différence de pression droite/gauche et adapte la pression la plus élevée à la plus basse dès que cette différence dépasse une valeur de seuil prédéterminée. C'est-à-dire qu'il adapte la pression de commande des freins d'un essieu à la pression de freinage la plus faible de chacune des roues de ce même essieu.

Ces consignes de pression de commande avant et arrière (Pav, Par) sont orientées d'une part vers les actionneurs du véhicule et d'autre part vers le bloc 4 qui constitue un modèle de référence simplifié du véhicule. Ce modèle est égal à l'inverse de celui décrit dans le bloc 2. Il permet d'estimer la décélération du véhicule ($\gamma$ estimée) en fonction des pressions de commande des freins avant et arrière, de la masse totale du véhicule et des coefficients d'efficacité de freinage des trains avant et arrière, selon la formule :

$$\gamma\ \text{estimée} = (K_{av}\ P_{av} + K_{ar}\ P_{ar})/M\ \text{où}$$

M représente la masse totale du véhicule,
Pav la pression de commande des freins avant,
Par la pression de commande des freins arrière,
Kav le coefficient d'efficacité de freinage du train avant,
Kar le coefficient d'efficacité de freinage du train arrière.

Dans le cas où les coefficients d'efficacité de freinage (Kav, Kar) sont représentatifs de l'efficacité réelle du freinage, les valeurs (Pav) (et (Par) sont telles que la position du point de fonctionnement de la répartition de freinage est optimale, et que l'on se trouve à la limite du dérapage.

On récupère donc en sortie du bloc 4 une grandeur représentative de la décélération estimée du véhicule( estimée).

On soustrait alors à cette décélération la valeur de décélération réelle mesurée du véhicule issue du capteur de décélération 17. Cette différence est appelée erreur ( $\varepsilon$ ) dans la suite et représente une évaluation des perturbations non mesurables du freinage telles que les variations d'efficacité de freinage, la mauvaise route, etc....

$$\varepsilon = \gamma \text{ estim.} - \gamma \text{ réel.}$$

Avant d'additionner l'erreur ($\varepsilon$) à la consigne de décélération, on soustrait à la dite erreur ($\varepsilon$) une valeur représentative de l'accélération du véhicule ($\gamma$o) avant le déplacement de la pédale de frein. L'erreur est également traitée par un filtre passe-bas (5) avant d'être additionnée à ladite consigne de décélération ($\gamma$c). Le rôle de ce filtre est d'assurer la stabilité et la robustesse du processus de régulation.

L'erreur filtrée vient corriger la consigne de décélération ($\gamma$c) via un interrupteur 7 normalement fermé lors de l'avancement du véhicule et ouvert lors de la marche arrière du véhicule.

L'erreur est donc additionnée à la consigne de décélération lors de l'avancement du véhicule.

Le bloc 8 détecte l'avancement du véhicule en déterminant le rapport de transmission fournit par la boîte de vitesses à partir des mesures des vitesses des roues motrices, du régime moteur et des rapports de démultiplication mécaniques entre le moteur et les roues.

Pour des raisons économiques, afin de connaître le rapport de transmission, il est préférable de traiter ces informations qui proviennent de capteurs habituellement présents sur le véhicule plutôt que de monter un capteur supplémentaire sur la boîte de vitesses.

Les coefficients d'efficacité de freinage des trains avant et arrière (Kav, Kar) utilisés dans le processus de régulation sont recalculés périodiquement par le bloc 6, en fonction des coefficients d'efficacité de freinage initiaux des trains avant et arrière (Kavo, Karo), d'un coefficient p déterminé empiriquement et du rapport existant entre l'erreur et la somme de l'erreur et de la consigne de décélération

$$\begin{cases} K_{av} = K_{avo} (1 + a) \text{ avec } a = -\dfrac{\varepsilon}{\gamma_c + \varepsilon} \\ K_{ar} = K_{aro} (1 + pa) \text{ et } 0 < p < 1 \end{cases}$$

La variable (a) constitue un estimateur de la variation d'efficacité globale. Les coefficients initiaux d'efficacité de freinage des essieux avant et arrière sont des coefficients inhérents au sytème embarqué sur l'automobile et dépendants par exemple de la largeur de la plage de frottement du disque de freinage et du type de plaquettes utilisées.

Dans le cas d'une variation d'efficacitée (a), d'un quelconque des trains avant ou arrière ou des deux, le coefficient p permet d'effectuer une répartition pondérée de cette perte d'efficacité entre les deux trains du véhicule. On peut remarquer qu'en l'absence de perturbations de freinage ( $\varepsilon$ = o, a = o), on retrouve les coefficients d'efficacité de freinage initiaux qui correspondent dans ce cas aux coefficients d'efficacité réels. On se trouve à nouveau au point de fonctionnement optimal, c'est-à-dire au point où l'efficacité de freinage du train arrière est maximalisée, c'est-à-dire encore en limite de dérapage.

Avant d'être communiqués aux blocs 2 et 4, les coefficients d'efficacité de freinage des trains avant et arrière sont traités par un filtre passe-bas dont la constante de temps prend une valeur plus faible pendant les phases de freinage que pendant les autres phases.

En effet, pendant les phases de freinage, il est important que le système prenne rapidement en compte les variations d'efficacité du freinage, ou perturbations de freinage, de façon à adapter les pressions avant et arrière rapidement.

Par contre, après toute phase de freinage il est nécessaire de réinitialiser les constantes (Kav, Kar) afin de les recalculer plus justement lors de la phase suivante. Une solution simple consisterait à réinitialiser la variable (a), fonction de ( $\gamma$c) et servant aux calculs des coefficients (Kav) et (Kar), en lui imposant une valeur fixe dès que la pédale de freinage n'est plus actionnée. Mais, dans le but d'améliorer la réponse du système lors de freinages répétitifs, il est préférable de ne pas oublier le calcul des coefficients d'efficacité préalablement réalisé. Dans ce but, lors des relâchements de la pédale de freinage, qui se traduisent par une remise à zéro de ( $\gamma$c), on ne prendra en compte la variation brutale de cette variable (a) qu'après un temps assez long correspondant à la 2ème constante de temps du filtre passe-bas de sortie du bloc 6.

## Revendications

1. Procédé de régulation de la décélération d'un véhicule muni de roues avant (21, 21') et arrière (22, 22') équipées d'actionneurs de freinage à commande électrique (5, 5', 15, 15') qui consiste à mesurer la décélération réelle ($\gamma_{réel}$) du véhicule, à élaborer une consigne de décélération ($\gamma_c$) en fonction du déplacement (c) de la pédale de freinage et de l'effort ($F_p$) exercé sur-celle-ci, et à ajuster les pressions de commande des freins avant ($P_{av}$) et arrière ($P_{ar}$) de façon que la décélération réelle mesurée ($\gamma_{réel}$) soit égale à la consigne de décélération ($\gamma_c$), caractérisé en ce que l'on ajoute à la consigne de décélération ($\gamma_c$) une erreur (E), égale à la différence entre une valeur de décélération estimée ($\gamma_{estim}$) du véhicule et la valeur de décélération réelle ($\gamma_{réel}$) du véhicule, la valeur de décélération estimée étant calculée à partir des pressions de commande des freins avant et arrière ($P_{av}$, $P_{ar}$), des coefficients d'efficacité de freinage des trains avant et arrière ($K_{av}$, $K_{ar}$) et de la masse (M) du véhicule.

2. Procédé de régulation de la décélération d'un véhicule selon la revendication 1, caractérisé en ce que la décélération estimée est égale au rapport de la somme des produits du coefficient d'efficacité ($K_{av}$, $K_{ar}$) de chacun des trains avant et arrière par la pression de freinage ($P_{av}$, $P_{ar}$) correspondante à la masse (M) du véhicule.

3. Procédé de commande selon les revendications 1 ou 2, caractérisé en ce qu'avant d'additionner l'erreur à la consigne de décélération ($\gamma_c$), on soustrait à ladite erreur ($\varepsilon$) une valeur représentative de l'accélération ($\gamma_o$) du véhicule avant le déplacement de la pédale de frein.

4. Procédé selon la revendication 3, caractérisé en ce que l'on calcule les coefficients d'efficacité de freinage des trains avant et arrière en fonction des coefficients d'efficacité de freinage initiaux (Kavo, Karo) des trains avant et arrière et du rapport existant entre l'erreur et la somme de l'erreur ($\varepsilon$) et de la consigne de décélération ($\gamma_c$).

5. Procédé selon la revendication 4, caractérisé en ce que l'erreur est traitée par un filtre passe-bas (5) avant d'être additionnée à la consigne de décélération.

6. Procédé selon la revendication 5, caractérisé en ce que l'erreur est additionnée à la consigne de décélération lors de l'avancement du véhicule.

7. Procédé de régulation de la décélération d'un véhicule équipé d'une boîte de vitesses, selon la revendication 6, caractérisé en ce que l'on détecte l'avancement du véhicule en déterminant le rapport de transmission fourni par la boîte de vitesses à partir des mesures des vitesses des roues motrices, du régime moteur et des rapports de démultiplication mécaniques entre le moteur et les roues.

8. Procédé selon l'une quelconque des revendications 1 à 7, caractérisé en ce que l'on calcule une pression de commande des freins avant (Pav) en multipliant la consigne de décélération ($\gamma_c$) additionnée de l'erreur ($\varepsilon$) par le rapport existant entre la charge supportée par le train avant (Mav) et le coefficient d'efficacité de freinage du train avant (Kav).

9. Procédé selon l'une quelconque des revendications 1 à 8, caractérisé en ce que l'on calcule une pression de commande des freins arrière (Par) en multipliant la consigne de décélération ($\gamma_c$) additionnée de l'erreur ($\varepsilon$) par le rapport existant entre la charge supportée par le train arrière (Mar) et le coefficient d'efficacité de freinage du train arrière (Kar).

10. Procédé selon l'une quelconque des revendications 1 à 9, caractérisé en ce que les coefficients d'efficacité de freinage des trains avant et arrière sont traités par un filtre passe-bas dont la constante de temps prend une valeur plus faible pendant les phases de freinage que pendant les autres phases.

11. Procédé selon l'une quelconque des revendications 1 à 10, caractérisé en ce que le coefficient d'efficacité de freinage du train avant est pondéré par un coefficient p.

## Claims

1. Method of regulating the deceleration of a vehicle provided with front wheels (21, 21') and rear wheels (22, 22') fitted with electrically controlled brake actuators (5, 5', 15, 15') which consists of measuring the real deceleration

($\gamma_{real}$), to produce a set value of deceleration ($\gamma_c$) according to the displacement (c) of the brake pedal and the effort ($F_p$) exerted upon it, and of adjusting the pressures for controlling the front brakes ($P_{av}$) and rear brakes ($P_{ar}$) such that the real deceleration measured ($\gamma_{real}$) equals the set value of deceleration ($\gamma_c$), characterised in that an error (E), equal to the difference between an estimated value of deceleration ($\gamma_{estim}$) of the vehicle and the value of the real deceleration of the vehicle ($\gamma_{real}$) is added to the set value of deceleration ($\gamma_c$), the estimated value of deceleration being calculated from the pressures for controlling the front and rear brakes ($P_{av}$, $P_{ar}$), the braking efficiency coefficients of the front and rear sets of wheels ($K_{av}$, $K_{ar}$) and the mass (M) of the vehicle.

2. Method of regulating the deceleration of a vehicle according to claim 1, characterised in that the estimated deceleration is equal to the ratio of the sum of the products of the efficiency coefficient ($K_{av}$, $K_{ar}$) of each of the front and rear sets of wheels by the braking pressure ($P_{av}$, $P_{ar}$) corresponding to the mass (M) of the vehicle.

3. Method of control according to claim 1 or claim 2, characterised in that before adding the error to the set value of deceleration ($\gamma_c$), a value representative of the acceleration ($\gamma_o$) of the vehicle before the displacement of the brake pedal is subtracted from said error ($\varepsilon$).

4. Method according to claim 3, characterised in that the braking efficiency coefficients of the front and rear sets of wheels are calculated according to the initial braking efficiency coefficients (Kavo, Karo) of the front and rear sets of wheels and of the ratio existing between the error and the sum of the error ($\varepsilon$) and the set value of deceleration ($\gamma_c$).

5. Method according to claim 4, characterised in that the error is processed by a low band pass filter (5) before being added to the set value of deceleration.

6. Method according to claim 5, characterised in that the error is added to the set value of deceleration when the vehicle is moving forwards.

7. Method of regulating the deceleration of a vehicle equipped with a gear box, according to claim 6, characterised in that the forward movement of the vehicle is detected by determining the transmission ratio delivered by the gear box from measurements of the speeds of the drive wheels, of the engine speed and of the mechanical reduction ratios between the engine and the wheels.

8. Method according to any one of claims 1 to 7, characterised in that a pressure for controlling the front brakes (Pav) is calculated by multiplying the set value of deceleration ($\gamma_c$) plus the error ($\varepsilon$) by the ratio existing between the load supported by the front set of wheels (Mav) and the braking efficiency coefficient of the front set of wheels (Kav).

9. Method according to any one of claims 1 to 8, characterised in that a pressure for controlling the rear brakes (Par) is calculated by multiplying the set value of deceleration ($\gamma_c$) plus the error ($\varepsilon$) by the ratio existing between the load supported by the rear set of wheels (Mar) and the braking efficiency coefficient of the rear set of wheels (Kar).

10. Method according to any one of claims 1 to 9, characterised in that the braking efficiency coefficients of the front and rear sets of wheels are processed by a low pass filter, the time constant of which has a lower value during the braking phases than during the other phases.

11. Method according to any one of claims 1 to 10, characterised in that the braking efficiency coefficient of the front train is weighted by a coefficient p.

**Patentansprüche**

1. Verfahren zur Regelung der Verzögerung eines Fahrzeugs, das mit Vorderrädern (21,21') und Hinterrädern (22,22') versehen ist, die mit elektrisch gesteuerten Bremsanordnungen ausgerüstet sind, das darin besteht, die tatsächliche Verzögerung ($\gamma_{réel}$) des Fahrzeugs zu messen, einen Verzögerungswert ($\gamma_c$) als Funktion des Verschiebeweges (c) des Bremspedals und der auf dieses ausgeübten Kraft $F_p$ zu erzeugen, und die Steuerdrücke (Par) für die vorderen Bremsen und (Par) für die hinteren Bremsen derart einzustellen, daß die tatsächliche gemessene Verzögerung ($\gamma_{réel}$) gleich dem Verzögerungswert ($\gamma_c$) ist, **dadurch gekennzeichnet**, daß zu dem Verzögerungswert ($\gamma_c$) ein Fehlerwert (E) hinzugefügt wird, der gleich der Differenz ist zwischen einem festgelegten Verzögerungswert ($\gamma_{estim}$) des Fahrzeugs und dem tatsächlichen Verzögerungswert ($\gamma_{réel}$) des Fahrzeugs, wobei der festgelegte Verzögerungswert berechnet wird ausgehend von den Steuerdrücken (Pav, Par) für die vorderen Bremsen und die hinteren Bremsen, von Koeffizienten (Kav, Kar) für den Bremswirkungsgrad der Vorderachse und der Hinterachse und dem Gewicht (M) des Fahrzeugs.

2. Verfahren zur Regelung der Verzögerung eines Fahrzeugs nach Anspruch 1, **dadurch gekennzeichnet**, daß der festgelegte Verzögerungswert gleich dem Verhältnis ist aus der Summe der Produkte des Koeffizienten des Wirkungsgrades (Kac, Kar) sowohl der Vorderachse als auch der Hinterachse zu dem dem Gewicht (M) des Fahrzeugs entsprechenden Bremsdruck (Pac, Par).

3. Verfahren zur Steuerung nach den Ansprüchen 1 oder 2, **dadurch gekennzeichnet**, daß vor der Hinzufügung des Fehlerwertes zum Verzögerungswert ($\gamma_c$) von dem Fehlerwert ($\epsilon$) ein Wert abgezogen wird, der die Beschleunigung ($\gamma_o$) des Fahrzeugs vor der Betätigung des Bremspedals darstellt.

4. Verfahren nach Anspruch 3, **dadurch gekennzeichnet**, daß die Koeffizienten des Bremswirkungsgrades der Vorderachse und der Hinterachse als Funktion der ursprünglichen Koeffizienten des Bremswirkungsgrades (Kavo, Karo) der Vorderachse und der Hinterachse und des auftretenden Verhältnisses zwischen Fehlerwert und Summe aus Fehlerwert ($\epsilon$) und Verzögerungswert ($\gamma_c$) berechnet werden.

5. Verfahren nach Anspruch 4, **dadurch gekennzeichnet**, daß der Fehlerwert von einem Tiefpaßfilter (5) verarbeitet wird, bevor er dem Verzögerungswert hinzugefügt wird.

6. Verfahren nach Anspruch 5, **dadurch gekennzeichnet**, daß der Fehlerwert dem Verzögerungswert während der Vorwärtsfahrt des Fahrzeugs hinzugefügt wird.

7. Verfahren zur Regelung der Verzögerung eines Fahrzeugs, das mit einem Getriebe versehen ist nach Anspruch 6, **dadurch gekennzeichnet**, daß die Vorwärtsfahrt des Fahrzeugs gemessen wird durch Bestimmung des vom Getriebe mitgeteilten Ganges ausgehend von Messungen der Geschwindigkeiten der Antriebsräder, der Motordrehzahl und der mechanischen Kraftübersetzungen zwischen Motor und Rädern.

8. Verfahren nach einem der Ansprüche 1 bis 7, **dadurch gekennzeichnet**, daß ein Steuerdruck (Pav) für die vorderen Bremsen berechnet wird durch Multiplikation des Verzögerungswertes ($\gamma_c$), dem der Fehlerwert ($\epsilon$) hinzugefügt wurde, mit dem existierenden Verhältnis zwischen dem von der Vorderachse getragenen Gewicht (Mav) und dem Koeffizienten des Bremswirkungsgrades für die Vorderachse (Kav).

9. Verfahren nach einem der Ansprüche 1 bis 8, **dadurch gekennzeichnet**, daß ein Steuerdruck (Par) für die hinteren Bremsen berechnet wird durch Multiplikation des Verzögerungswertes ($\gamma_c$), dem der Fehlerwert ($\epsilon$) hinzugefügt worden ist, mit dem auftretenden Verhältnis zwischen dem von der Hinterachse getragenen Gewicht (Mar) und dem Koeffizienten des Bremswirkungsgrades der Hinterachse (Kar).

10. Verfahren nach einem der Ansprüche 1 bis 9, **dadurch gekennzeichnet**, daß die Koeffizienten des Bremswirkungsgrades der Vorderachse und der Hinterachse von einem Tiefpaßfilter verarbeitet werden, dessen Zeitkonstante während der Bremsphasen einen geringeren Wert als während der anderen Phasen annimmt.

11. Verfahren nach einem der Ansprüche 1 bis 10, **dadurch gekennzeichnet**, daß der Koeffizient des Bremswirkungsgrades der Vorderachse durch einen Koeffizienten (p) gewichtet wird.

fig.1

fig.2